# EUROPÄISCHE PATENTSCHRIFT

(11) **EP 1 469 028 B1**
(45) Veröffentlichungstag und Bekanntmachung des Hinweises auf die Patenterteilung: **29.08.2007**
(21) Anmeldenummer: 04008547.4
(22) Anmeldetag: 08.04.2004
(51) Int. Cl.: C08G 65/326, D06M 15/53

(54) **Verwendung von alkoxylierten Polyolderivaten zum Behandeln von Textilien**
Use of alkoxylated polyol derivatives for treating textiles
Utilisation de dérivés de polyols alkoxylés pour le traitement de textiles

(30) Priorität: 17.04.2003 DE 10318079
(43) Veröffentlichungstag der Anmeldung: 20.10.2004
(73) Patentinhaber: Cognis IP Management GmbH, 40589 Düsseldorf (DE)
(72) Erfinder: Wahle, Bernd, Dr., 41564 Kaarst (DE); Hartschen, Christa, 47800 Krefeld (DE); Falkowski, Jürgen, 40789 Monheim (DE); Mauer, Werner, 48324 Albersloh (DE)

(56) Entgegenhaltungen:
- WO-A-01/25387
- DE-A- 3 700 280
- US-A- 3 933 421
- US-A- 4 448 817

## Beschreibung

Die vorliegende Erfindung betrifft Salze von alkoxylierte S-haltigen Polyolen, wässrige Mittel, die derartige Salze enthalten sowie die Verwendung der Salze bzw. der wässrigen Mittel in Wasch-, Reinigungs- oder Nachbehandlungsmitteln für Textilien und insbesondere zur Behandlung von Textilien die Wolle oder Baumwolle enthalten.

Beim Waschen von Textilien, insbesondere bei Textilien, die Naturfasern, wie Wolle und Baumwolle enthalten, tritt häufig eine Knötchenbildung auf (das sogenannte Pilling). Zur Vermeidung oder Verringerung dieses Effekts sind aus dem Stand der Technik die Verwendung bestimmter Bunte-Salze bekannt. Bei Bunte-Salzen handelt es sich um eine Gruppe von Schwefelverbindungen der allgemeinen Formel R-S-SO₂-OM (Thioschwefelsäure-S-ester) wobei R ein organischer, meist aliphatischer Rest und M ein einwertiges Metallkation darstellen. Bunte-Salze sind als solche seit langem bekannt und werden für die verschiedensten Anwendungszwecke in der Technik genutzt. So werden in der GB 1,423,341 und der GB 1,423,342 Bunte-Salze und deren alkoxylierte Derivate zur Behandlung von Haaren, zum Färben von Fasern sowie zur Ausrüstung und Behandlung von Textilien beschrieben. Dabei ist der GB 1,423,341 zu entnehmen, dass sich die dort beschriebenen Bunte-Salze auch zum Einsatz in Wollbehandlungsmitteln eigenen.

Die vorliegende Erfindung basiert nun auf der überraschenden Feststellung, dass ausgewählte alkoxylierte und kationisch- oder anionisch derivatisierte Polyole mit vorzugsweise höheren Molekulargewichten besondere Eigenschaften bei der Behandlung von Fasern und Textilien, insbesondere solchen aus Wolle und insbesondere während der Wollwäsche aufweisen. Besonders gute Eigenschaften wurden dabei bei solchen Derivaten gefunden, die vorzugsweise schwefelhaltigen Funktionalitäten aufweisen.

Gegenstand der vorliegenden Anmeldung ist daher die Verwendung von Verbindungen der allgemeinen Formel (II) 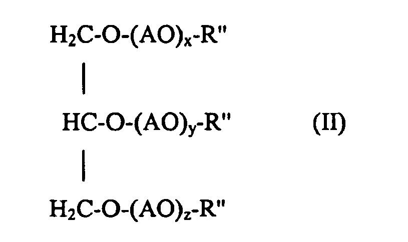 in der R" unabhängig voneinander für ein Wasserstoffatom oder einen Rest OC-CH₂-S-SO₃M steht und in den Verbindungen mindestens ein Rest R" enthalten sein muss, der kein Wasserstoffatom ist, wobei AO jeweils unabhängig voneinander eine Gruppe C₂H₄O- bzw. C₃H₆O- oder C₄H₈O- bedeutet und die Indizes x, y und z unabhängig voneinander für Null oder gerade oder ungerade Zahlen stehen deren Summe mindestens 1 und maximal 500 ergeben muss und M jeweils für ein mindestens einfach geladenes Kation steht, mit der weiteren Maßgabe, das im Falle dass x, y oder z den Wert null haben, der jeweilige Rest R" für ein Wasserstoffatom steht.
in Wasch- und Reinigung- oder Avivagemitteln zur Verbesserung des Pillingverhaltens von Fasern oder Garnen.

Bevorzugt sind dabei jeweils Verbindungen der Formeln (II) in der R" einen Rest OC-CH₂-S-SO₃M darstellt. Es handelt sich dabei um Bunte-Salze. Bevorzugt sind solche Verbindungen der Formel (II) in der die Summe von x, y und z die Werte 10 bis 100, insbesondere 30 bis 80 und vorzugsweise 40 bis 60 ergibt.

Die Verbindunge (II) werden vorzugsweise hergestellt, indem man in einem ersten Schritt das alkoxylierte Glycerin, mit Chloressigsäure umsetzt. Dabei hat es sich als vorteilhaft erwiesen, die Veresterung bei erhöhten Temperaturen, vorzugsweise 140° C bis 200° C und reduziertem Druck, hier insbesondere 20 bis 40 mbar durchzuführen. Bei diesen Reaktionsbedingungen wird das bei der Veresterung freiwerdende Wasser abdestilliert. Anschließend lässt man den Reaktionsansatz abkühlen und versetzt den Chloressigsäureester mit Natriumthiosulfat. Als Lösungsmittel wird ein niederer organischer Alkohol, wie Isopropanol oder Ethanol zugesetzt. Die anschließende Umsetzung findet im Siedebereich des Lösungsmittels statt. Danach wird das Lösungsmittel abdestilliert und das erhaltene Rohprodukt mit Wasser zum Endprodukt vermischt.

Die Verbindungen der allgemeinen Formel (II) enthalten Alkoxidgruppen (AO), wobei diese unabhängig voneinander aus der Gruppen C₂H₄O-, C₃H₆O- und/oder C₄H₈O- ausgewählt sein können. Es sind auch solche Verbindungen umfasst, bei denen die einzelnen Hydroxylgruppen des Glycerins mit Ethylenoxid, Propylenoxid und/oder Butylenoxid und deren Isomeren umgesetzt wurden bzw. mit Mischungen aus Ethylenoxid, Propylenoxid und/oder Butylenoxid. Dabei werden vorzugsweise solche alkoxylierten Polyole und vorzugsweise Glycerine für die Synthese der erfindungsgemäßen Verbindungen verwendet, deren OH-Gruppen vollständig alkoxyliert wurden. Besonders bevorzugt sind solche Verbindungen der Formel (II) die entweder nur Ethylenoxidgruppen oder nur Propylenoxidgruppen enthalten. Besonders bevorzugt im Sinne der vorliegenden Erfindung sind insbesondere solche Verbindungen der Formel (II), die nur propoxyliert sind.

Die Kationen M sind vorzugsweise ausgewählt aus der Gruppe Natrium und Kalium, wobei Natrium besonders bevorzugt ist. Hier können aber auch andere Kationen verwendet werden, z.B. Ammoniumsalze und NH₄⁺.

Neben den anionisch modifizierten Verbindungen der Formel (II) sind prinzipiell auch kationische Modifikationen geeignet. In diesen Fällen werden beispielsweise quaternierte N-Atome in die Moleküle integriert.
In der Formel (I) steht der Index m für die Anzahl der derivatisierten OH-Gruppen des jeweiligen Polyols wobei es bevorzugt ist solche Verbindungen der Formel (I) auszuwählen, in denen der Index m für eine Zahl von 1 bis 10, vorzugsweise 1 bis 5 und insbesondere von 1 bis 3 stehen. Vorteilhaft ist es, wenn das Produkt der Indices n und m in Summe mindestens 50 ergibt. Als Maximalwert ist das Produkt aus n und m etwa 500. Das Molekulargewicht (M_{R}) der Verbindungen der Formel (I) liegt vorzugsweise im Bereich von größer/gleich 500 und besonders bevorzugt bei Werten von 1000 und höher.

Es sind Verbindungen der Formel (II) bevorzugt, deren Index m für 3 steht, und der Index n eine Zahl von 15 bis 50 bedeutet, wobei die Gesamtzahl an Gruppen (AO) bevorzugt mindestens 50 betragen muss. Auch hier sind die Verbindungen bevorzugt, die nur propoxyliert sind.

Ein weiterer Gegenstand der vorliegenden Anmeldung betrifft wässrige Mittel, welche die Verbindungen gemäß Formel (II) in Mengen von 0,1 bis 90 Gew.-%, vorzugsweise bis 60 Gew.-%, bezogen auf das Gesamtgewicht des Mittels enthalten. Es hat sich als vorteilhaft erwiesen, dass diese wässrigen Mittel einen pH-Wert bei 21° C im Bereich von 4 bis 10,5 und vorzugsweise von 5 bis 9 und insbesondere von 6 bis 8 aufweisen. Ganz besonders bevorzugt ist der pH-Wert im Bereich von 8,0 bis 8,5.

Wäßrige Mittel enthalten die Verbindungen der Formel (II) vorzugsweise in Mengen von 0,1 bis 90, bevorzugt von 10 bis 50, insbesondere 25 bis 45 und besonders bevorzugt in Mengen von 35 bis 45 Gew.-%. Neben Wasser und den Verbindungen der Formel (II) enthalten die erfindungsgemäßen Mittel vorzugsweise - aber optional - noch Säuren oder Basen zur Einstellung des pH-Werts sowie weitere dem Fachmann, insbesondere für Wasch- und Reinigungsmittel, bekannte Hilfs- und Zusatzstoffe.

Es ist daneben auch möglich, wässrige Mittel im Sinne der vorliegenden Erfindung zu formulieren, die in den Verbindungen der Formel (II) noch Tenside und hier vorzugsweise nichtionische Tenside, wie z.B. Fettalkoholethoxylate und deren Derivate enthalten.

Die Verbindungen der Formel (II) eigenen sich zur permanenten oder temporären Behandlung von Textilien aller Art, also sowohl von synthetischen als auch von natürlichen Fasern bzw. Mischgeweben aller Art. Vorzugsweise werden die Verbindungen der Formel (II) insbesondere zum Waschen von keratinhaltigen Textilfasern bzw. textilen Flächengeweben, die derartige Fasern enthalten eingesetzt, sowie auch zur Behandlung von Baumwolle oder Textilien, die Baumwolle enthalten. Es handelt sich aber vorzugsweise um die Behandlung von Wolle oder Wolle-Mischgewebe. Neben textilen Flächengeweben, die nur aus Wolle bestehen, können selbstverständlich auch solche verwendet werden, die Wolle in Abmischung mit anderen üblichen und geeigneten Fasern, beispielsweise aus Polyamid oder Polyesterfasern, enthalten.

Die Behandlung von vorzugsweise Wollfasern bzw. wollfaserhaltigen Textilien mit den Verbindungen der Formel (II) führt überraschenderweise zu einer Verbesserung des sogenannten Pillingeffektes. Die Knötchenbildung auf der Oberfläche der Fasern kann durch den Einsatz der Verbindung der Formel (II) wirksam vermindert werden. Weiterhin führt die Behandlung der Textilien mit den Verbindungen bzw. Mitteln der vorliegenden Erfindung zu einer Verringerung der Anzahl vorhandener Knoten. Es wird eine Glättung der Fasern beobachtet und die Textilien wirken optisch glatter.

Ein weiterer Gegenstand der vorliegenden Anmeldung betrifft deshalb die Verwendung von wässrigen Mitteln, wie oben beschrieben, zur Behandlung von keratinhaltigen Textilfasern und insbesondere zur Behandlung von Wollfasern bzw. Textilien, die anteilig oder vollständig Wolle enthalten oder zur Behandlung von Baumwolle.

Die Verbindungen Formel (II) eigenen sich generell zum Einsatz in bekannten Wasch- und Reinigungsmitteln. Besonders vorteilhaft ist es, die Verbindungen der Formel (II) in Form ihrer wässrigen Mittel im Zusammenhang mit an sich bekannten Wollwasch- und Pflegemitteln einzusetzen. Dies kann gleichzeitig geschehen, oder zeitlich versetzt, z.B. erst eine Behandlung des Waschguts mit den weichmachenden Mitteln und anschließend in einem separaten Schritt der Zusatz der erfindungsgemäßen Mittel. Es ist aber bevorzugt, die wässerigen Mittel gemäß der vorliegenden Anmeldung zusammen mit weichmachenden Mitteln zur Wäschenachbehandlung einzusetzen. Derartige weichmachende Mittel, auch Avivagemittel genannt, sind dem Fachmann bekannt, wobei es sich in der Regel um wässrige Formulierungen handelt, die Abmischungen von anionischen und nichtionischen Tensiden, ggf. in Abmischung mit quaternären Ammoniumverbindungen und insbesondere solchen quaternären Ammoniumverbindungen enthalten, die eine oder mehrere Esterfunktionen im Molekül aufweist. Der Zusatz von Verbindungen der Formel (II) bzw. von wässrigen Mitteln, wie oben beschrieben, zu derartigen Wasch- Reinigungs- oder Avivagemitteln führt zu einer deutlichen Verbesserung der pflegenden Wirkung auf die Wolle und insbesondere zu einer deutlichen Einschränkung und Verminderung des Pillingeffektes.

### Beispiele

### Beispiel 1

Es wurde das Schrumpf- und Pillingverhalten nach dem Waschen in Abmischung eines kommerziellen Wollwaschmittels mit einem wässerigen erfindungsgemäßen Mittel bei Zugabe von 1%, 5%, 10% bei Lufttrocknung und bei Tumblertrocknung untersucht. Das wässerige Mittel enthielt das 42 Gew.-% eine propoxylierten Verbindung der Formel (II) mit x + y + z = 50. Der pH-Wert des wässerigen Mittels betrug bei 21 °C 8,0.

Der Schrumpf des gewaschenen Wollgewebes lag bei allen Proben bei 4%. Beim Pillingtest waren keine großen Unterschiede festzustellen zwischen den luftgetrockneten Proben und der Trocknung im Tumbler.

### Wollwäsche in einer Miele Waschmaschine

| | | |
|---|---|---|
| Programm: | Wolle, 40°C, Wasser plus | |
| Füllung: | 1 kg | |
| Schleudern: | 400 Umdrehungen | |
| | | |
| Trocknung: | 1. Luft | |
| | 2. Tumbler, Programm: Buntwäsche Schonen | |
| | | |
| Dosierung: | 0-Probe | 90,0 g Perwoll flüssig (Vergleich) |
| | 1-Probe | 89,1 g Perwoll-flüssig + 0,9 g des erfindungsgemäßen Mittels |
| | 2-Probe | 85,5 g Perwoll flüssig + 4,5 g des erfindungsgemäßen Mittels |
| | 3-Probe | 81,0 g Perwoll flüssig + 9,0 g des erfindungsgemäßen Mittels |

### Beurteilung

optisch durch menschliches Auge - je größer der Wert, desto geringer das Pilling.

### Pilling Beurteilung: Lufttrocknung

| **Probe.** | **125 U** | **500U** | **1000U** | **2000U** | **5000U** |
|---|---|---|---|---|---|
| | | | | | |
| 0 | 4 | 3-4 | 3 | 2-3 | 2 |
| 1 | 4 | 3-4 | 2-3 | 2 | 1-2 |
| 2 | 4-5 | 4 | 3-4 | 3 | 2-3 |
| 3 | 5 | 5 | 4-5 | 4 | 3-4 |

### Pilling Beurteilung: Tumbler

| **Probe** | **125 U** | **500U** | **1000U** | **2000U** | **5000U** |
|---|---|---|---|---|---|
| | | | | | |
| 0 | 4 | 3-4 | 3 | 2 | 2 |
| 1 | 4 | 3-4 | 3 | 2 | 1-2 |
| 2 | 4-5 | 4 | 3-4 | 3 | 2-3 |
| 3 | 5 | 5 | 4-5 | 4 | 3-4 |

### Beispiel 2

Es wurde das Schrumpfverhalten nach 1, 10 und 20 Wäschen sowie das Pillingverhalten nach der 20. Wäsche an waschmaschinenfesten Pullovern (reine Schurwolle) ermittelt mit a) Wollwaschmittel und b) in Abmischung des Wollwaschmittels mit einem erfindungsgemäßen Mittel wie in Beispiel 1 bei Zugabe von 10 Gew.-%. Der Schrumpf des mit Perwoll gewaschenen Pullovers war geringfügig. Bei der Abmischung mit dem erfindungsgemäßen Mittel war kein Schrumpf zu erkennen. Beim Pillingtest waren bis 500 Umdrehungen deutliche Unterschiede festzustellen. Zu bemerken ist, dass das Maschenbild nach 20 Wäschen mit Zusatz des erfindungsgemäßen Mittels brillanter und geschlossener ist.

### Wollwäsche in der Miele Waschmaschine

| | | |
|---|---|---|
| Programm: | Wolle, 40°C, Wasser plus | |
| Füllung: | 1 kg | |
| Schleudern: | 400 Umdrehungen | |
| | | |
| Trocknung: | 1. Luft | |
| | | |
| Dosierung: | 0-Probe | 90,0 g Perwoll flüssig (Vergleich) |
| | 1-Probe | 81,0 g Perwoll flüssig + 9 g erfindungsgemäßes Mittel |

### Schrumpf Beurteilung: Lufttrocknung

| **Probe** | **Ausgangswert** | **1. Wäsche** | | **10. Wäsche** | | **20. Wäsche** | |
|---|---|---|---|---|---|---|---|
| | | | | | | | |
| Perwoll | 25 x 25 cm | 24.6 x 24.5 cm | | 24.5 x 24.4 cm | | 24.5 x 24.4 cm | |
| gewaschen | 100% | 1.6% | 2% | 2% | 2.4% | 2% | 2.4% |
| | | | | | | | |
| mit erfindungs- | 25 x 25 cm | 25 x 25 cm | | 25 x 25 cm | | 25 x 25 cm | |
| gemäßem Mittel | 100% | 100% | | 100% | | 100% | |

### Pilling Beurteilung: Lufttrocknung

| **Probe** | **125 U** | **500 U** | **1000 U** | **2000 U** | **5000 U** |
|---|---|---|---|---|---|
| | | | | | |
| Perwoll gewaschen | 4-5 | 3 | 2 - 3 | 2 | 1 |
| | | | | | |
| +10% erfindungsgemäße m Mittel | 5 | 4 | 3 | 2-3 | 1-2 |

### Beispiel 3

Es sollten das Schrumpf- und Pillingverhalten nach dem Waschen mit Wollwaschmittel (Perwoll, V1), mit einem Glycerin+50PO (V2), mit Glycerin + 50PO, quatemiert mit 3-Chlor-2-hydroxypropyldimethyl-dodecylammoniumchlorid (V3) und dem erfindungsgemäßen Mittel wie in Beispiel 1 (E) untersucht bei Lufttrocknung und bei Tumblertrocknung untersucht werden. Der Schrumpf des gewaschenen Wollgewebes lag bei allen Proben bei 4%. Beim Pillingtest waren Unterschiede festzustellen zwischen normalen Wollwaschmittel und den Einzelsubstanzen der luftgetrockneten Proben und der Trocknung im Tumbler.

### Wollwäsche in der Miele Waschmaschine

Programm Wolle 40°C Wasser plus
Füllung 1kg
Schleudern 400 Umdrehungen

| | | | |
|---|---|---|---|
| Trocknung: | a. Luft | | |
| | b. Tumbler Programm Buntwäsche Schonen | | |
| | | | |
| Dosierung: | 1-Probe | 90g | V 1 |
| | 2-Probe | 9g | V2 |
| | 3-Probe | 9g | V3 |
| | 4-Probe | 9g | E |

### Pilling Beurteilung Lufttrocknung

| **Probe gewaschen** | **125 U** | **500U** | **1000U** | **2000U** | **5000U** |
|---|---|---|---|---|---|
| nur Wasser | 4 | 3 | 2 - 3 | 1-2 | 1 |
| V1 | 4 | 3-4 | 3 | 2-3 | 2 |
| V2 | 4-5 | 4 | 3-4 | 1-2 | 1 |
| V3 | 4-5 | 4 | 3-4 | 1-2 | 1 |
| E | 5 | 4 | 3-4 | 2-3 | 2 |

### Pilling Beurteilung Tumbler

| **Probe gewaschen** | **125 U** | **500U** | **1000U** | **2000U** | **5000U** |
|---|---|---|---|---|---|
| nur Wasser | 4 | 3 | 2 | 1 | 1 |
| V1 | 4 | 3-4 | 3 | 2 | 1-2 |
| V2 | 4-5 | 4 | 3 | 1 | 1 |
| V3 | 4-5 | 4 | 3 | 2 | 1-2 |
| E | 5 | 4 | 3-4 | 2-3 | 1-2 |

### Beispiel 4

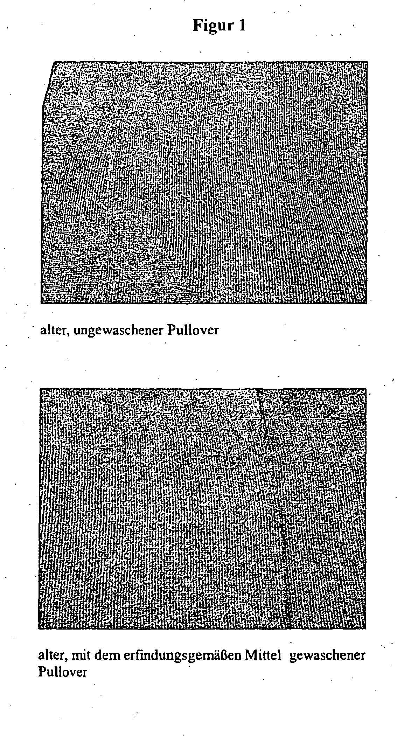

Es wurde an einem alten, viel getragenen Wollpullover mit starkem Pillingeffekt (Knötchenbildung) ein Waschversuch durchgeführt mit einem kommerziell erhältlichen Wollwaschmittel (Perwoll der Fa. Henkel) zusammen mit einem wässerigen wie in Beispiel 1 enthielt.
Gewaschen wurde der Pullover in einer Miele Waschmaschine. Programm: Wolle, 40 °C Wasserplus. Die Füllung betrug 1 kg. Im Schleudergang wurde mit 400 U/min gearbeitet. Die Dosierung betrug 90 g des Produktes Perwoll flüssig. Dazu wurden 9 g des erfindungsgemäßen wässerigen Mittels gegeben. Nach dem Waschen wurde der Pullover an der Luft getrocknet. Bei der Beurteilung des gewaschenen Pullovers waren deutliche Unterschiede erkennbar. Das Maschenbild zeigte auch an dem alten, stark getragenen Pullover ein klareres Bild. Der starke Pillingeffekt war nicht mehr erkennbar. In der Figur 1 sind die Ergebnisse fotografisch wiedergegeben.

## Patentansprüche

1. Verwendung von Verbindungen der allgemeinen Formel (II) 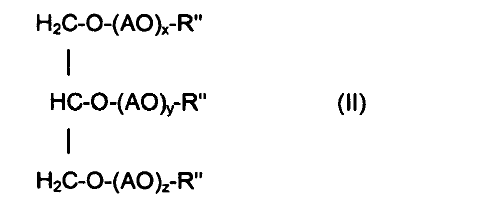 in der R" unabhängig voneinander für ein Wasserstoffatom oder einen Rest OC-CH₂-S-SO₃M steht und in den Verbindungen mindestens ein Rest R" enthalten sein muss, der kein Wasserstoffatom ist, wobei AO jeweils unabhängig voneinander eine Gruppe C₂H₄O-bzw. C₃H₆O- oder C₄H₈O- bedeutet und die Indizes x, y und z unabhängig voneinander für Null oder gerade oder ungerade Zahlen stehen deren Summe mindestens 1 und maximal 500 ergeben muss und M jeweils für ein mindestens einfach geladenes Kation steht, mit der weiteren Maßgabe, das im Falle dass x, y oder z den Wert null haben, der jeweilige Rest R" für ein Wasserstoffatom steht.
in Wasch- und Reinigung- oder Avivagemitteln zur Verbesserung des Pillingverhaltens von Fasern oder Garnen.

2. Verwendung nach Anspruch 1, wobei in der allgemeinen Formel (II) die Summe der Indizes x, y und z, jeweils die Werte 10 bis 100 ergibt.

3. Verwendung nach Anspruch 1 oder 2, wobei in den Verbindungen der allgemeinen Formel (II), AO ausschließlich für eine Gruppe C₃H₆-O steht.

4. Verwendung nach den Ansprüchen 1 bis 3, wobei in den Verbindungen der allgemeinen Formel (II), AO ausschließlich für eine Gruppe C₂H₄-O steht.

5. Verwendung nach den Ansprüchen 1 bis 4, wobei in den Verbindungen der Formel (II) die Indizes x, y und z in Summe eine Zahl von 50 bis 500 ergeben.

## Claims

1. Use of compounds corresponding to general formula (II): 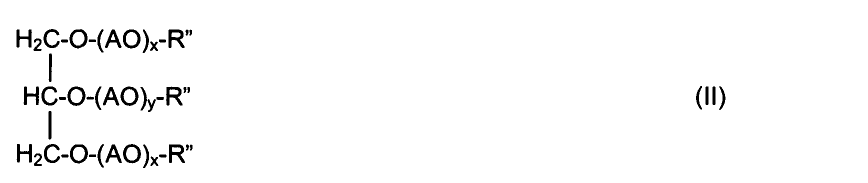 in which the substituents R" independently of one another represent a hydrogen atom or a group OC-CH₂-S-SO₃M or SO₃M, at least one substituent R which is not a hydrogen atom having to be present in the compounds, the AO's independently of one another represent a group C₂H₄O-, C₃H₆O- or C₄H₈O- and the indices x, y and z independently of one another stand for 0 or for even or uneven numbers which, together, should have a value of at least 1 and at most 500, and the M's represent a cation with at least one charge, with the further proviso that, where x, y or z is 0, the particular substituent R" is a hydrogen atom,
in detergents or softeners for improving the pilling behaviour of fibres of yarns.

2. Use claimed in claim 1, **characterized in that**, in general formula (II), the sum of the indices x, y and z is a number of 10 to 100.

3. Use claimed in claim 1 or 2, **characterized in that**, in the compounds corresponding to general formula (II), AO is exclusively a group C₃H₆-O.

4. Use claimed in claims 1 to 3, **characterized in that**, in the compounds corresponding to general formula (II), AO is exclusively a group C₂H₄-O.

5. Use claimed in claims 1 to 4, **characterized in that**, in the compounds corresponding to general formula (II), the sum of the indices x, y and z is a number of 50 to 500.

## Revendications

1. Utilisation de composés répondant à la formule générale (II) 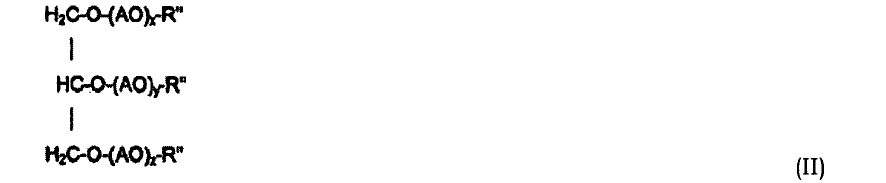 dans laquelle les radicaux R" représentent indépendamment les uns des autres, un atome d'hydrogène ou un radical OC-CH₂-S-SO₃M et au moins un radical R" ne doit pas être un atome d'hydrogène, et les radicaux AO, représentent, indépendamment les uns des autres, un groupe C₂H₄O- ou C₃H₆O- ou C₄H₈O- et les indices x, y et z, représentent indépendamment, les uns des autres, zéro ou des nombres pairs ou impairs dont la somme doit être au minimum égale à 1 et au maximum égale à 500, et M représente respectivement un cation ionisé au moins une fois, étant en outre précisé que, dans le cas où x, y ou z ont la valeur zéro, le radical R" correspondant représente un atome d'hydrogène,
dans des agents de lavage et de nettoyage ou d'avivage pour améliorer le comportement au boulochage de fibres ou de fils.

2. Utilisation selon la revendication 1, selon laquelle la somme des indices x, y et z dans la formule générale (II) est comprise entre 10 et 100.

3. Utilisation selon la revendication 1 ou 2, selon laquelle dans les composés répondant à la formule générale (II) les radicaux AO représentent exclusivement un groupe C₃H₆O

4. Utilisation selon les revendications 1 à 3, selon laquelle dans les composés répondant à la formule générale (II) les radicaux AO représentent exclusivement un groupe C₂H₄O-

5. Utilisation selon les revendications 1 à 4, selon laquelle dans les composés répondant à la formule générale (II) la somme des indices x, y et z est un nombre compris entre 50 et 500.
